# EUROPEAN PATENT APPLICATION

(11) **EP 2 779 064 A1**
(43) Date of publication of application: **17.09.2014**
(21) Application number: 14000862.4
(22) Date of filing: 11.03.2014
(51) Int. Cl.: G06Q 20/12, G06Q 20/32, G06Q 20/22, G06Q 20/36

(54) **System and method for mobile transaction payments**

(30) Priority: 12.03.2013 US 201313795371
(71) Applicant: Carta Worldwide, Inc., Oakville, Ontario L6J 1H9 (CA)
(72) Inventor: Mendes, Rui, Oakville, Ontario, L6J 2R3 (CA)
(74) Representative: Müller-Boré & Partner Patentanwälte PartG mbB

(57) **Abstract**

A method and system are disclosed for mobile transaction payments. A merchant device generates a machine-readable code containing merchant information and details of a transaction and displays this to a user device. The user device scans the code, or receives a message via NFC from the merchant device, to retrieve the transaction details and the merchant information. The user device then communicates this information, along with secure account information containing a virtual credit card or other payment type, to a merchant acquiring host, which processes the payment in association with an issuer host. Upon receipt of authorization from the issuer host, the merchant acquiring host informs both the merchant and the use of the status of the transaction.

## Description

### BACKGROUND

The subject disclosure is directed to the near field communications arts, the communications arts, the service providing arts, the radio communications arts, the mobile computing arts, transactional arts, point-of-sale arts, and the like.

Mobile payment generally refers to regulated financial services that are performed by or from a mobile device. Mobile payment is an alternative method of payment that, instead of using cash, checks, or credit cards, the user may use a mobile phone to pay for a wide range of goods and services. There are currently four models for conducting such mobile payments, SMS-based transactional payments, direct mobile billing, mobile web payments (using Wireless Application Protocol (WAP) technology), and contactless near field communications.

SMS-based transactional payments require a user of the mobile device to send an SMS text message or the like, to a short code and a resulting premium charge is added to the user's phone bill or online wallet (as described below). The merchant in the transaction is then informed of the success of the payment and may release the goods, perform the services, etc. Unfortunately, this type of mobile payment has poor reliability, is slow, provides minimal security, high start-up and operating costs, and the like.

Direct mobile billing generally involves a two-factor authentication (e.g., PIN and one-time-password) following which the user's mobile device account is charged for the purchase. Such payment is typical of payments made using mobile phones via ITUNES and ANDROID MARKET, e.g., payment for purchase of games, apps, music, etc. The security for such billing is higher than the SMS-based transactions, faster, convenient (no pre-registration, input of credit/debit cards), and easy (for online purchases). However, this method is limited to online purchases from the aforementioned sites or sites operated by the user's carrier. Additionally, already large carrier telephone bills may present a substantial shock to the user when such purchases are added.

Mobile web payments provide for the display and usage of web sites or downloaded applications to make payments to vendors. This type of operation inherently includes the benefits and disadvantages associated with web-based payments. For example, the user must still pre-register some form of credit card (unless directly billed to the carrier as set forth above); the process mirrors the typical online purchase format familiar to Internet users; if no pre-registration is available, the user must enter credit card information directly via the mobile device, which is prone to entry errors, and the like. Online wallets provided by PAYPAL, AMAZON PAYMENTS and GOOGLE CHECKOUT have mobile options, which involves online user registration. The user first provides a telephone number to one of the online wallet operators, whom then returns an SMS message having a PIN. The user then authenticates the number by entering the PIN and inputs credit card information or another payment method. Payments are then validated during a limited number of transactions. That is, the online wallets are useful for online purchases from a fixed location from online vendors. However, mobility is an issue as the online wallet is maintained by the providers and not on the mobile device, which is especially disadvantageous at a retail establishment that does not provide for online purchases.

Near field communications ("NFC") is a set of standards for smartphones and similar portable user devices to establish radio communication with each other by touching them together or bringing them into close proximity, e.g., a few centimeters. The short-range wireless technologies employed in NFC operations typically require a distance of 10 cm or less. NFC requires an initiator and a target, with the initiator capable of actively generating an RF field that can power a passive target or communicate with an active target. NFC is generally used in physical transactions, wherein the vendor and the user are in close physical proximity, e.g., at retail establishments, transportation services, restaurants, and the like. This type of mobile payment requires a specially designed mobile device equipped with a smartcard that is "swiped" by holding the mobile device in close physical proximity to a card reader. The transaction in question may involve direct billing, PIN-based authentication, bank billing, pre-paid account, or the like. Unfortunately, this method requires a suitably equipped mobile device, as well as suitably equipped card readers at the point-of-sale. Widespread adoption of NFC has thus been hindered by users unwilling to purchase new phones equipped with NFC, vendors unwilling to purchase the equipment necessary to read NFC devices, mobile device manufacturers unwilling to incorporate additional features over which they have little control, etc.

A mobile wallet, in contrast to an online wallet, may include software, hardware, or a combination thereof, resident on a mobile device, that includes one or more linked accounts. However, current implementations of mobile wallets are based on specific infrastructure and/or network acceptance. For example, STARBUCKS mobile wallet is only accepted at their corresponding coffee establishments, PAYPAL is only accepted when online merchants connect to PAYPAL, GOOGLE CHECKOUT (mobile wallet variant) only works if you use a CITIBANK credit card, in a specific region, and using a specific device.

QUICK RESPONSE (QR) codes is a type of matrix barcode, two- dimensional bar code that constitutes a type of machine-readable code. QR codes are generally capable of encoding a greater quantity of data than a typical barcode, and are associated with a faster response time. Current smartphones include both rear and front facing cameras, with the various operating systems having applications that allow for scanning and reading of these codes, which are becoming prevalent at restaurants, stores, and online. The code itself may be represented by a white square having a pattern of black squares located thereon encoding the desired information. The types of information capable of being encoded range from numeric, alphanumeric, binary and may further be extended to other types of data. Some applications of such QR codes include transportation ticketing, metadata, product information, and the like.

Current implementations of NFC mobile payments require the communication from a user's mobile device of payment information to a merchant device. The merchant device is then tasked with contacting a merchant acquiring host (payment processor) to facilitate completion of a transaction. This communication of secure account information represents a possible threat to security, as the credit card number is communicated to the merchant, leaving the user without control of secure information. For example, an employee of the merchant may steal this credit card number during checkout, without the user ever realizing until made aware of the theft via bank or credit card statement. Even requiring the use of a PIN to send the credit card information to the merchant device does not stop the theft, as the PIN is only entered on the user's mobile device and is not transmitted, or if it does, it just adds another point for possible theft to occur. Furthermore, credit card issuers or banks are typically met with the user denying transactions, stating that it was a stolen number even when no such theft occurred.

Thus, it would advantageous to provide a system and method for secure mobile transaction payments that do not require the transmission of secure account information from the user to the merchant, but still enable completion of a transaction between the user and the merchant.

### INCORPORATION BY REFERENCE

The following reference, the disclosure of which is incorporated herein by reference, in their entirety, is mentioned.

U.S. Patent Application Serial No. 13/533,057, filed June 26, 2012, entitled MOBILE WALLET PAYMENT PROCESSING, by Rui Mendes.

### BRIEF DESCRIPTION

In one aspect of the exemplary embodiment, a method for mobile transaction payments, which includes receiving, by a user device, merchant information and transaction details corresponding to a transaction between an associated merchant and an associated user. The method further includes generating a merchant acquiring message inclusive of the transaction details, the merchant information, and account holder secure information corresponding to the associated user. The method also includes communicating the merchant acquiring message to a merchant acquiring host via an associated computer network. In addition, the mobile transaction payment method includes receiving a response from the merchant acquiring host corresponding to at least one of an authorization or denial of the transaction. The method also includes displaying, via an associated display, a status of the transaction in accordance with the received authorization or denial of the transaction. The receiving, generating, communicating, receiving, or displaying is performed with a computer processor of the user device.

In another aspect, a mobile transaction payment system includes a merchant acquiring host. The merchant acquiring host includes an authorization request component that is configured to generate an authorization request to an associated issuer host for a transaction between an associated merchant device and an associated user device. The merchant acquiring host further includes memory that stores instructions for receiving a merchant acquiring message from the associated user device. The merchant acquiring message includes transaction details, merchant information and account holder secure information. The instructions are also for identifying the associated issuer host in accordance with the account holder secure information of the merchant acquiring message. Additionally, the instructions stored in memory are for generating the authorization request to the identified issuer host, which request corresponds to the transaction details, merchant information, and account holder secure information. The instructions are also for communicating the authorization or the denial of the transaction associated with the transaction details to the associated merchant device and the associated user device. The system also includes a processor in communication with the memory that executes the instructions.

In another aspect, a computer-implemented mobile payment transaction method that includes collecting, by a merchant device having a processor and memory storing merchant information corresponding to an associated merchant, at least one transaction detail corresponding to a transaction between the associated merchant and an associated user. The method further includes generating a machine-readable code corresponding to the at least one collected transaction detail and the merchant information, and displaying the generated machine-readable code via an associated display. In addition, the method includes receiving an authorization or a denial of the transaction from an associated merchant acquiring host, and displaying the status of the transaction.

### BRIEF DESCRIPTION OF THE DRAWINGS

FIGURE 1 is a functional block diagram of a system for mobile transaction payments in accordance with one aspect of the exemplary embodiment.
FIGURE 2 is a functional block diagram of an example merchant device used in the system for mobile transaction payments in accordance with one aspect of the exemplary embodiment.
FIGURE 3 is a functional block diagram of an example user device used in the system for mobile transaction payments in accordance with one aspect of the exemplary embodiment.
FIGURE 4 is a flowchart that illustrates one aspect of the method for mobile transaction payment associated with a merchant device according to an exemplary embodiment.
FIGURE 5 is a flowchart that illustrates another aspect of the method for mobile transaction payment associated with a user device according to an exemplary embodiment.
FIGURE 6 is a flowchart that illustrates another aspect of the method for mobile transaction payment associated with the merchant device according to an exemplary embodiment.
FIGURE 7 is a flowchart that illustrates another aspect of the method for mobile transaction payment associated with the user device according to an exemplary embodiment.
FIGURE 8 is a flowchart that illustrates another aspect of the method for mobile transaction payment associated with a merchant acquiring host according to an exemplary embodiment.
FIGURE 9 is a flowchart that illustrates another aspect of the method for mobile transaction payment associated with an issuer host according to an exemplary embodiment.

### DETAILED DESCRIPTION

One or more embodiments will now be described with reference to the attached drawings, wherein like reference numerals are used to refer to like elements throughout.

In one aspect, a system and method provides enhanced security for mobile payment processing by allowing the user device to communicate the transaction and payment details to a merchant acquiring host for processing, thereby avoiding transmission of payment information directly to merchants. That is, the system and method disclosed herein enables a user device to render payment for goods or services to a merchant without requiring the user device to disclose credit card or other personal information to the merchant to complete the transaction.

It will be appreciated that the systems and methods described herein enable the utilization of a secure ecosystem wherein encrypted (encoded) messages may be exchanged between devices, with transactions split in content and authorization, and where settlements of transactions take place in real time. It will further be appreciated that the subject systems and methods enable individuals and merchants to respectively pay and receive money without the need of external payment devices, e.g., credit card readers, etc. Furthermore, it will be appreciated that the systems and methods described hereinafter allows for the total validation of electronic commerce transactions by substantially reducing purchaser denial fraud. In embodiments contemplated utilizing the subject systems and methods, a bridge is provided between open and closed loop networks and may be integrated with near field communication payments on supporting devices.

As used herein, a "merchant" denotes an individual or establishment that offers goods or services for sale to customers, such as a store, retailer, vendor, restaurant, service provider, etc.

"User" denotes an individual who is a customer of the system associated with a "user device" and conducting a transaction with a "merchant."

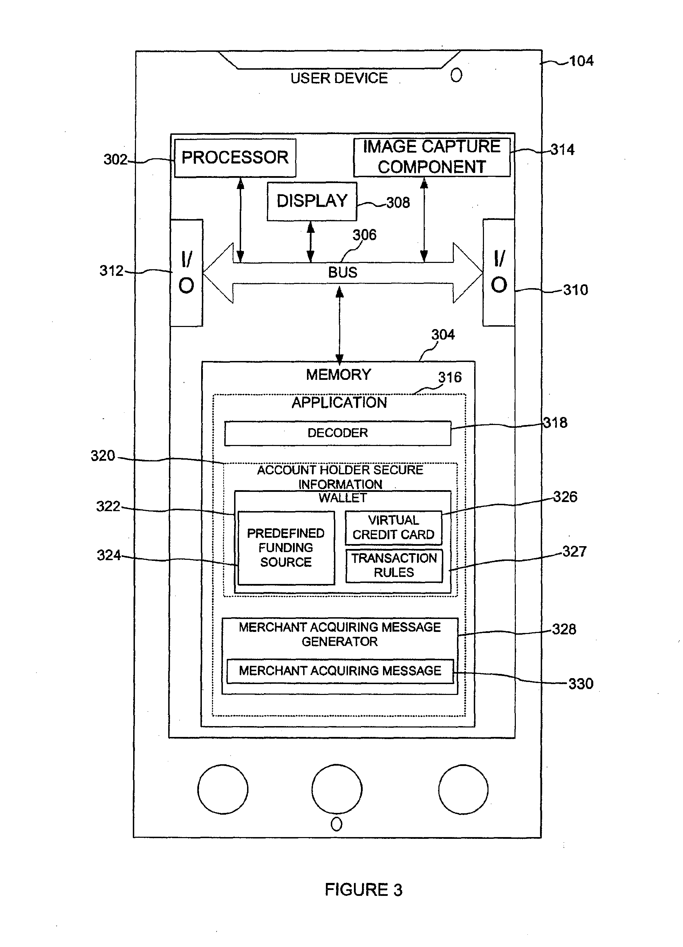

"Merchant device" denotes a device owned by the merchant and able to initiate an "application" for interacting with the system for mobile transaction payments. Examples of such a merchant device include, without limitation, mobile phones, personal data assistants, tablets, point-of-sale devices, computer workstations, registers, and other electronic devices. An exemplary merchant device is illustrated and discussed with respect to FIGURE 3 below.

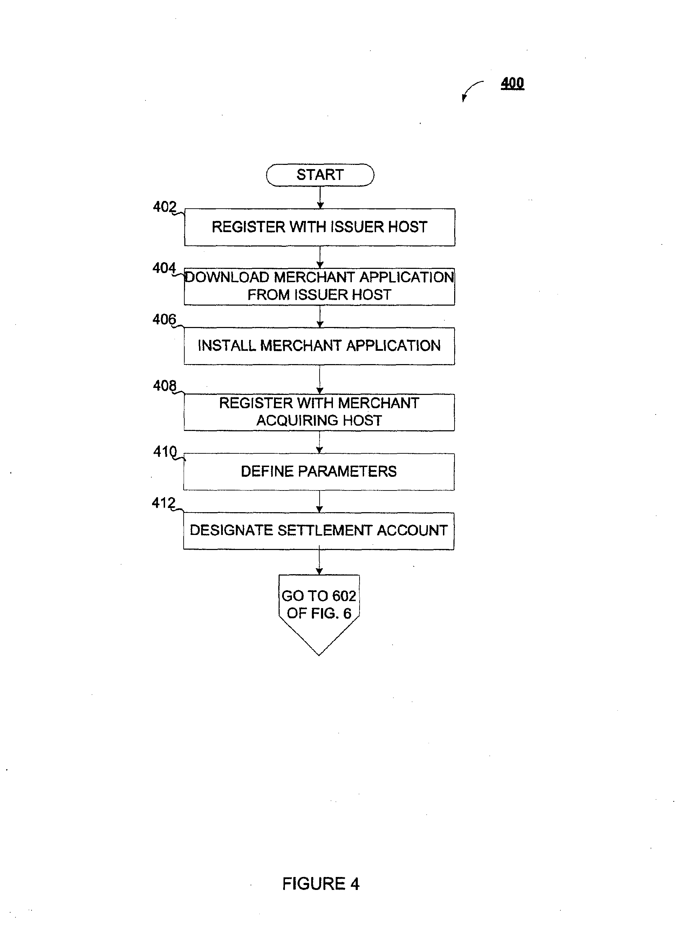

"User device" or "mobile device" denotes a device owned by the user and able to initiate an "application" for interacting with the system for mobile transaction payments. Examples of such a user device include, without limitation, mobile phones, personal data assistants, tablets, and other personal electronic devices. The user device may include a camera or other image-capturing component that is capable of scanning and capturing machine-readable code. The user device may be NFC-enabled, as well as capable of data communication with one or more wired or wireless networks, as discussed with respect to FIGURE 4 below.

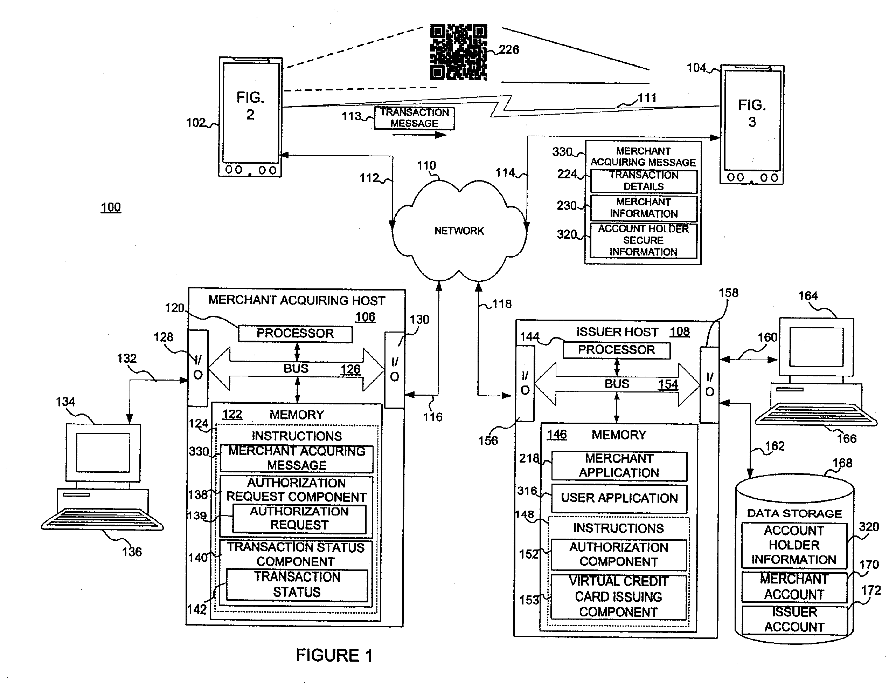

"Merchant acquiring host" denotes the server or servers in communication with the merchant device, the user device, and an "issuer host." The merchant acquiring host may include various components, as illustrated in FIGURE 1, configured to interact with and facilitate completion of transactions associated with the mobile transaction payment systems and methods described hereinafter.

"Issuer host" denotes the server or servers in communication with the merchant device, the user device, and a merchant acquiring host. The issuer host may include various components, as illustrated in FIGURE 1, configured to issue and settle accounts amongst the merchants and users of the mobile transaction payment systems and methods described hereinafter.

In one aspect, a merchant device, such as a point-of-sale device, mobile device, etc., enables the merchant to install an application that includes a code generator for generating a machine-readable code, such as a quick response (QR) code, a DataGlyph, or other such code, that includes merchant identification and details of a transaction with a user. This code may then be displayed on a display associated with the merchant device and thus made available to be scanned, i.e., read, by a user device. The merchant device may also include a close proximity communications component, such as Near Field Communications (NFC), to enable the transmission of transaction details from the merchant device to an associated user device. In other embodiments, the merchant device may utilize applications that detect the presence of a user device and communicate details to a corresponding application on the user device via a computer network, such as the Internet, either directly or via a third party server.

One aspect of the system and method may provide an application for installation on a user device, such as a mobile communications device, tablet, personal computer, etc., that includes access to a mobile wallet. The application installed on the user device may include a decoder that is operable to read and decode a machine-readable code displayed by the merchant device. The user device may also include a close proximity communications component that is capable of receiving transaction details from the merchant device. The application resident on the user device may further include access to a mobile wallet, utilizing a credit card account, a virtual credit card, a debit account, or the like, which is adapted to facilitate payment for transactions. The application may further include a merchant acquiring message generator that generates a message, which includes the transaction details and payment information for communication to a merchant acquiring host for processing. During setup of the application, a virtual credit card may be created by an issuer host, as set forth in U.S. Application Serial No. 13/533,057, filed June 26, 2012 and titled MOBILE WALLET PAYMENT PROCESSING, the entirety of which is incorporated by reference herein.

Another aspect of the system and method described herein may further provide for a merchant acquiring host to facilitate the completion of the transaction between the merchant device and the user device. The merchant acquiring host may receive transaction details and payment information from the user device and request authorization from an issuer host, which may be selected during setup of the respective applications on the merchant device and the user device. Upon receipt of merchant acquiring message, the merchant acquiring host may parse the amounts due and payment information and contact the issuer host seeking authorization for the transaction. The issuer host may then approve the transaction, thereafter transferring payment from the issuer to the merchant and return this approval to the merchant acquiring host. The issuer host may debit or charge a payment source selected by the user during installation of the application on the user device prior to settling payment due the merchant. The merchant acquiring host may then communicate authorization (approval) or denial of the transaction to both the merchant device and the user device to complete or deny the transaction.

It will be appreciated that the systems and methods set forth herein are independent from cellular telephone manufacturers, cellular phone network operators, and cellular phone operating systems, based upon the use of certain machine-readable codes and/or the NFC standard. Additionally, the systems and methods need not be dependent upon the SIM card capability and of mobile phone security services (e.g., GOOGLEWALLET). In some embodiments, the SIM Secure Element (SE) or the SE on the mobile device itself may be utilized to provide additional security. The systems and methods further provide robust interoperability for the user between multiple service providers utilizing the same application, with the user and merchant able to complete transactions using their respective devices. Thus, the subject systems and methods set forth herein provide greater security in mobile payment applications, and allow for payment from a user device to a merchant via a merchant's mobile device, a merchant's point-of-sale device, web-based merchant transactions, and the like. The systems and methods further provide robust interoperability for the user device between multiple service providers, e.g., cellular telephone carriers, etc., with the user only having to register with the merchant acquiring host and conducting all payments through this host, with no payment information transferred to the merchant itself.

It will further be appreciated that while illustrated in FIGURE 1 as implemented in a merchant system, e.g., a physical storefront, the systems and methods set forth hereinafter are equally adaptable and contemplated to extend to any merchant providing goods or services to users. For example, the system may be implemented to enable transactions in a variety of environments, e.g., facilitate payment at restaurants, parking lots, taxi services, airports, online shopping, sports venues, movie theaters, and the like. Accordingly, it will be appreciated that myriad environments are capable of utilizing the systems and methods now set forth.

Referring now to FIGURE 1, there is shown a secure mobile transaction payment system **100** configured for providing mobile payment functionality with high levels of security for transactions between users and merchants. Figure 1 illustrates an example implementation in the form of a transaction between a merchant device **102** and a user device **104.** Other embodiments may include implementation utilizing the user device **104** and a web site hosted for the merchant. It will be appreciated that the various components depicted in FIGURE 1 are for purposes of illustrating aspects of the exemplary embodiment, and that other similar components, implemented via hardware, software, or a combination thereof, are capable of being substituted therein.

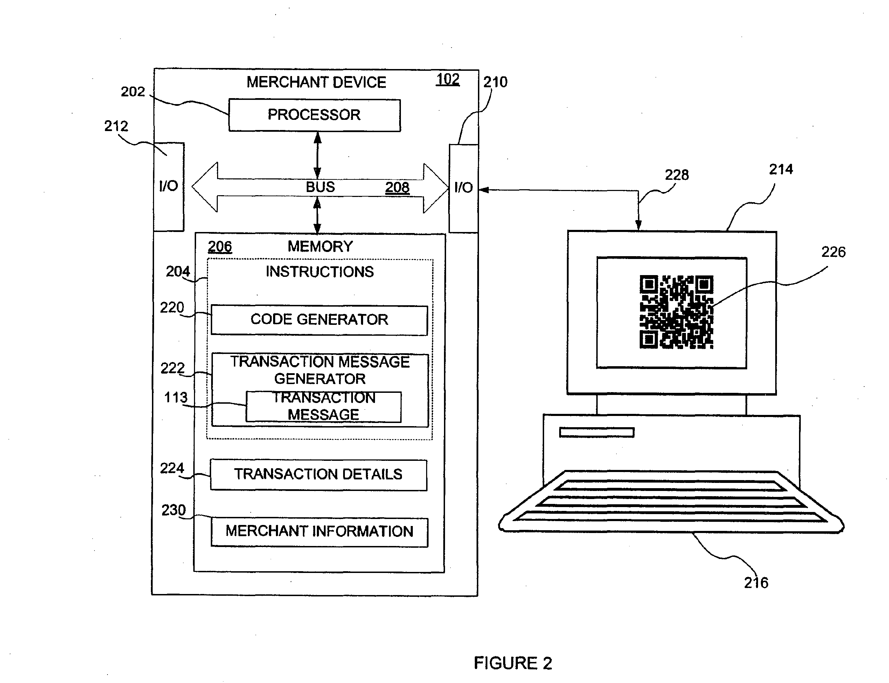

As shown in FIGURE 1, the secure mobile transaction payment system **100** for providing mobile payment functionality includes a merchant device **102,** described in greater detail in FIGURE 2, a user device **104** described in greater detail in FIGURE 3, a merchant acquiring host **106,** and an issuer host **108.** It will be appreciated that the system **100** for secure mobile transaction payment is capable of implementation using a distributed computing environment, such as the computer network **110** depicted in FIGURE 1, which is representative of any distributed communications system capable of enabling the exchange of data between two or more electronic devices, e.g., the devices **102-108.** It will be further appreciated that such a computer network includes, for example and without limitation, a virtual local area network, a wide area network, a personal area network, a local area network, the Internet, an intranet, or the any suitable combination thereof. Accordingly, such a computer network comprises physical layers and transport layers, as illustrated by various conventional data transport mechanisms, such as, for example and without limitation, Token-Ring, Ethernet, or other wireless or wire-based data communication mechanisms. Furthermore, while depicted in FIGURE 1 as a networked set of components, the system and method are capable of implementation on a stand-alone device adapted to perform the methods described herein.

The merchant device **102** depicted in FIGURE 1 may be configured to implement the exemplary method described below. An exemplary block diagram of a suitable merchant device **102** is shown in FIGURE 2. The merchant device **102** may include a computer server, workstation, personal computer, cellular telephone, tablet computer, pager, a point-of-sale device, a hosted website associated with the merchant for online sales, a combination thereof, or other computing device capable of executing instructions for performing the exemplary method. Thus, the exemplary merchant device **102** is depicted in FIGURE 2 to illustrate one example implementation and various other components may be used, substituted, and the like. The exemplary merchant device **102** includes a processor **202,** which performs the exemplary method by execution of processing instructions **204** that are stored in memory **206** connected to the processor **202,** as well as controlling the overall operation of the merchant device **102.**

According to one example embodiment, the merchant device **102** includes hardware, software, and/or any suitable combination thereof, configured to interact with an associated user, a networked device, networked storage, remote devices, or the like.

The various components of the merchant device **102** may all be connected by a data/control bus **208.** The merchant device **102** may include one or more input/output (I/O) interface devices **210** and **212** for communicating with external devices. The I/O interface **212** may communicate, via communications link **228,** with one or more of a display device **214,** for displaying information, such as transaction status information, transaction details **224,** machine readable code **226,** and a user input device **216,** such as a keyboard or touch or writable screen, for inputting text, and/or a cursor control device, such as mouse, trackball, or the like, for communicating user input information and command selections to the processor **202.** The I/O interface **210** may communicate, via communications link **112,** with a computer network **110** enabling communication with the merchant acquiring host **106,** the issuer host **108,** and other devices in communication with the computer network **110.**

The memory **206** may represent any type of non-transitory computer readable medium such as random access memory (RAM), read only memory (ROM), magnetic disk or tape, optical disk, flash memory, or holographic memory. In one embodiment, the memory **206** comprises a combination of random access memory and read only memory. In some embodiments, the processor **202** and memory **206** may be combined in a single chip. The network interface(s) **210, 212** allow the computer to communicate with other devices via a computer network, and may comprise a modulator/demodulator (MODEM). Memory **206** may store the data processed in the method as well as the instructions for performing the exemplary method.

The digital processor **202** can be variously embodied, such as by a single core processor, a dual core processor (or more generally by a multiple core processor), a digital processor and cooperating math coprocessor, a digital controller, or the like. The digital processor **202,** in addition to controlling the operation of the merchant device **102,** executes instructions **204** stored in memory **206** for performing the method outlined in FIGURES 4-9.

As depicted in FIGURE 2, the instructions **204** may include a merchant application **218** that is configured to facilitate interactions with the user device **104,** a merchant acquiring host **106,** an issuer host **108,** and the like, as discussed in greater detail below. According to one embodiment, the merchant application **218** may be downloaded from the merchant acquiring host **106** and installed in memory **204** of the merchant device **102.** The merchant application **218** may be customized for the specific merchant device **102** or merchant type (e.g., store, restaurant, etc.) associated therewith. The merchant application **218** may include one or more components operable to allow the merchant device **102** to interact with a user device **104,** the merchant acquiring host **106,** the issuer host **108,** and the like.

The merchant application **218** stored in the instructions **204** of the merchant device **102** may further a code generator **220.** The code generator, in accordance with one embodiment, is configured to generate a machine-readable code **226** corresponding to transaction details **224** associated with a transaction between the merchant device **102** and the user device **104.** It will be appreciated that the machine-readable code **226** may be a bar code, QR code, DatGlyph, or other such code, and the illustration of the machine-readable code **226** in FIGURE 2 is for purposes of illustration of a suitable machine-readable code contemplated hereunder. In some embodiments, the code **226** may include a timestamp, hash, the transaction details **224** (e.g., cost, items, totals, taxes, location, store number, etc.), merchant information **230** (e.g., merchant name, merchant type, other identifying information, etc.), and other information associated with the transaction between the merchant device **102** and the user device **104.** The code **226** may be communicated via the communications link **228** to the display **214** for reading/scanning by the user device **104,** as discussed in greater detail below.

The merchant application **218** stored in the instructions **204** may further include a transaction message generator **222** that is capable of generating a transaction message **113** that includes transaction details **224,** merchant information **230,** any additional fields (e.g., tips, etc.), and the like. In one embodiment, the transaction message generator **218** may be utilized to send, via a short-range communication link **111,** a transaction message **113** to an associated user device **104.** Suitable short-range communication links include, for example and without limitation, a proprietary interface, NFC, infrared, BLUETOOTH, and the like. In some embodiments, the merchant device **102** may communicate using the short-range communication link **113** via an established personal area network.

Returning to FIGURE 1, the secure mobile transaction payment system **100** may include a user device **102** that is capable of communication with the merchant device **102** via a communication link **111,** and the network **110** via a communications link **114.** The user device may further be in intermittent or continuous contact with the merchant acquiring host **106** and/or issuer host **108** during setup of the device **104** or during transactions with the merchant device **102.** In some embodiments, the user device **104** may utilize opportunistic communications with the merchant acquiring host **106,** such as when a cellular or data network is available. In one embodiment, the user device **104** may be implemented as a smartphone employing an operating system such as iOS, ANDROID, BLACKBERRY, WINDOWS, or the like, or any device having NFC capabilities.

The user device **104** is representative of any personal computing devices, such as personal computers, netbook computers, laptop computers, workstation computers, personal data assistants, web-enabled cellular telephones, tablet computers, proprietary network devices, or other web-enabled electronic devices. The data communications link **114** between the user device **104** and the network **110** may be accomplished via any suitable channel of data communications such as wireless communications, for example Bluetooth, WiMax, 802.11 a, 802.11b, 802.11g, 802.11(x), a proprietary communications network, infrared, optical, the public switched telephone network, cellular data network, e.g., 3^{rd} generation mobile phone standards (3G), 4^{th} generation standards (4G, 4G LTE, WiMax), EV-DO, standalone data protocols, or any suitable wireless data transmission system, or wired communications. In one embodiment, the user device **104** may communicate with the network **110** via a cellular data network.

FIGURE 3 provides an example illustration of a user device **104** depicted in FIGURES 1. The user device **104** may include a processor **302,** which executes one or more instructions or user applications **316** in the performance of an exemplary method discussed below. The user device **104** may further include a memory **304** storing the user application **316** in data communication with the processor **302** via a system bus **306.** The processor **302** of the user device **104** may be in data communication with the merchant device **102** via an I/O interface **312** and merchant acquiring host **106** and issuer host **108** via communications link **114** to the network **110** utilizing an I/O interface **310.**

In one embodiment, the I/O interface **312** is implemented as a short-range communication component, such as, for example an NFC component. In such an embodiment, the I/O interface **312** may be implemented using any suitable short-range communications protocol, and the use of NFC protocols is for example purposes only. The user device **104** may further include a display **308** suitably configured to display data to an associated user, receive input from the associated user, and the like. In some embodiments, the display **308** of the user device **104** may be configured as a touch-screen display capable of receiving user instructions via user contact on the display, e.g., LCD, AMOLED, LED, RETINA, etc., types of touch-screen displays.

The memory **304** may represent any type of non-transitory computer readable medium such as random access memory (RAM), read only memory (ROM), magnetic disk or tape, optical disk, flash memory, or holographic memory. In one embodiment, the memory **304** comprises a combination of random access memory and read only memory. In some embodiments, the processor **302** and memory **304** may be combined in a single chip. The network interface(s) **310, 312** allow the user device **104** to communicate with other devices via a communications network, and may comprise a modulator/demodulator (MODEM). Memory **304** may store data the processed in the method as well as the instructions for performing the exemplary method. The digital processor **302** can be variously embodied, such as by a single core processor, a dual core processor (or more generally by a multiple core processor), a digital processor and cooperating math coprocessor, a digital controller, or the like.

The user device **104** depicted in FIGURE 3 may further include an image capture component **314** in data communication with the processor **302** via the system bus **306.** The image capture component **314** may be any suitable component capable of capturing an image of, for example, a displayed machine-readable code **226.** Suitable examples of such image capture components include, for example and without limitation, digital camera components, CMOS image sensors, CCD type cameras, video cameras, and the like, of various resolution capabilities and speeds, as will be appreciated. In some embodiments contemplated herein, the image capture component **314** is further in communication with a decoder component **318** of the user application **316,** as discussed in greater detail below. According to one embodiment, the image capture component **314** is configured to capture an image of the machine-readable code **226** in sufficient resolution and detail to enable operation of the decoder **318** thereon.

The memory **304** of the user device **104** includes the user application **316** received from the issuer host **101** during registration of the user device **104,** as discussed below with respect to FIGURES 4-9. The user application **316** stored in memory **304** may include the decoder component **318,** which is configured to read and analyze a machine-readable code **226** displayed via the display **214** of the merchant device **102** and captured via the image capture component **314.**

The user application **316** stored in memory **304** may include account holder secure information **320** including a mobile wallet **322,** such as that described in U.S. Patent Application Serial No. 13/533,057, as incorporated above. Such a mobile wallet **322** may store, for example and without limitation, information related to a virtual credit card **326,** a predefined funding source **324,** and the like. In accordance with one embodiment, the mobile wallet **322** may be downloaded or retrieved from the issuer host **108** and operable in the memory **304** of the user device **104,** or may be installed as specific hardware in the user device **104.** As illustrated in FIGURE 1, the mobile wallet **322** may include a virtual credit card **326,** which may be issued on the fly during a transaction, issued by the issuer host **108** during set up and registration of the user application **316,** upon request from a user associated with the user device **104,** or the like. The virtual credit card **326** may correspond to a credit card, a charge card, or prepaid card issued by the issuer host **108** in association with MASTERCARD, VISA, DISCOVER CARD, AMERICAN EXPRESS, etc., rules and regulations. Accordingly, the mobile wallet **116** may further store one or more transaction rules or regulations **327** associated with the virtual credit card **326,** operation of the mobile wallet **322,** instructions for processing transactions with merchant device **102** or merchant acquiring host **106,** and the like. For example, the transaction rules **327** may include special handling instructions for certain vendors, products, services, locations, etc., which may indicate the type of payment to use, type of authorization, type of validation, type of user identification (e.g., PIN, social security number, mother's maiden name, etc.), and the like.

The mobile wallet **322** may also include some form of predefined funding source **324,** i.e., a credit card account, checking account, savings account, a charge card account, debit card account, etc., associated with the user that is provided by a bank, a financing company, a governmental entity, the issuer host **108,** or the like. According to one embodiment, the predefined funding source **324** may be used to fund or "top-up" the virtual credit card **326.** The account holder secure information **320,** which may be used to identify/authenticate the user and account(s) associated with the user device **104,** may be communicated to the issuer host **108** during installation of the user application **316** on the user device **104,** a registration process associated with the user device **104,** provided by the user during association of the predefined funding source **324,** or the like. In addition, some or all of the account holder secure information **320** may be required during the processing of a transaction with the merchant device **102** and the merchant acquiring host **106,** as discussed in greater detail below.

The user application **316** may further include a merchant acquiring host message generator **328** that is configured to generate a message **330** during the conduction of a transaction with the merchant device **102.** In one embodiment, the generator **328** may combine transaction details **224** with the account holder secure information **320,** merchant information **230,** and the like into a merchant acquiring message **330** for communication via the communications link **114** to the merchant acquiring host **106** over the computer network **110.** In such an embodiment, the account holder secure information **320** may include the virtual credit card **326** and other identifying indicia associated with the user. It will be appreciated that other account holder secure information, e.g., rules **327,** funding source **324,** wallet **322,** would not be included in the message **330** to the merchant acquiring host **106.** The message **330** may further include additional information associated with the transaction, e.g., taxes, tips, and the like, which are also communicated to the merchant acquiring host **106.**

During completion of a transaction between the user device **104** and the merchant device **102,** the user may bring the user device **104** into proximity with the merchant device **102** so as to establish an NFC or other close-proximity data link. The merchant device **102** may then communicate transaction message **113** to the user device **104,** which then generates a merchant acquiring message **330** for completing the transaction. For example, other proximity data links may be used such as Bluetooth, wherein the merchant device **102** is presented with a list of user devices **104** in physical proximity thereto, prompting the merchant associated with the merchant device **102** to select the appropriate user device **104.** The merchant device **102** may then communicate the transaction message **113** to the selected user device **102.**

In another example implementation, the list of user devices **104** presented to the merchant may correspond to those user devices **104** that have notified a backend component (e.g., merchant acquiring host **106,** issuer host **108,** or other device) of their respective geophysical locations, which correspond to the physical location of the merchant device **102.** The merchant device **102** may then communicate the transaction message **113** directly via a communications link with the user device **104** directly (link **111)** or indirectly through the network **110** to the backend component **(106, 108,** or other device), which then forwards the transaction message **113** to the user device **104** via the communications link **114.** In another embodiment, the user may initiate the user application **316,** which causes the image capture component **314** to capture a code **226** displayed by the merchant device **102.** The user application **316,** in accordance with operation of the processor **302,** then uses the decoder **318** to decode the transaction details **224** from the code **226** and generates the merchant acquiring message **330** for subsequent communication to the merchant acquiring host **106,** as discussed below.

Returning to FIGURE 1, the system **100** for secure mobile transaction payments further includes a merchant acquiring host **106** in data communication with the merchant device **102,** the user device **104,** and the issuer host **108** via its communication link **116** to the computer network **110.** As depicted in FIGURE 1, the merchant acquiring host **106** facilitates the completion of a transaction for goods or services between the merchant device **102** and the user device **104.** The merchant acquiring host **106** may be implemented as a computer server, workstation, personal computer, cellular telephone, tablet computer, pager, combination thereof, or other computing device capable of executing instructions for performing the exemplary method. According to one example embodiment, the merchant acquiring host **106** includes hardware, software, and/or any suitable combination thereof, configured to interact with an associated user, a networked device, networked storage, remote devices, or the like.

The exemplary merchant acquiring host **106** includes a processor **120,** which performs the exemplary method by execution of processing instructions **124** that are stored in memory **122** connected to the processor **120,** as well as controlling the overall operation of the merchant acquiring host **106.**

The instructions **124** include an authorization request component **138** configured to request authorization for the transaction from the issuer host **108** in accordance with the transaction details **230** received from the user device **104** in the merchant acquiring message **330.** The authorization request component **138** may generate a request for authorization **139** that includes some or all of the transaction details **230.** In one embodiment, such an authorization request **139** includes the merchant information **230,** select account holder secure information **320** and at least the amount to be paid by the user device **104** to the merchant device **102.** The authorization request from the authorization request component **138** may be communicated over via the communications link **116** over the computer network **110** to the issuer host **108,** via a direct connection (not shown) to the issuer host **108,** or the like. It will be appreciated that in some embodiments, the merchant acquiring host **106** and the issuer host **108** may be the same entity, hosted on the same device, or the like. Accordingly, it will be appreciated that the depiction of separate devices **106** and **108** are used herein to illustrate one particular implementation of the subject systems and methods.

The instructions **124** stored in memory **122** may further include a transaction status component **140** that is configured to receive authorization or denial from the issuer host **108** and communication transaction status **142** to the merchant device **102** and the user device **104** via the computer network **110.** In one embodiment, the status component **140** is configured to generate a message that notifies the merchant device **102** and the user device **104** of the acceptance, rejection, or pendency of the transaction. In some embodiments, the transaction status **142** may be updated and communicated in varying iterations to reflect the most current status of the transaction, e.g., transaction status **142** may indicate approval, denial, pending, communicating with host, etc.

The various components of the merchant acquiring host **106** may all be connected by a data/control bus **126.** The merchant acquiring host **106** may include one or more input/output (I/O) interface devices **128** and **130** for communicating with external devices. The I/O interface **128** may communicate, via communications link **132,** with one or more of a display device **134,** for displaying information and a user input device **136,** such as a keyboard or touch or writable screen, for inputting text, and/or a cursor control device, such as mouse, trackball, or the like, for communicating user input information and command selections to the processor **120.**

The system **100** illustrated in FIGURE 1, may further include an issuer host **108** associated with an issuing entity that is in data communication with the computer network **110** via a communications link **118.** The issuer host **108** may include a processor **144** that is capable of implementing a portion of the exemplary method described below by executing one or more instructions **148** stored in memory **146** communicatively coupled to the processor **144** via a system bus **154.** The processor **144** may be implemented to control overall operations of the issuer host **108.**

It will be appreciated that the issuer host **108** is representative of a computing device that is capable of facilitating interaction among disparate other computing devices in data communication therewith, such as, for example and without limitation, the merchant device **102,** the user device **104,** the merchant acquiring host **106,** and the like. In accordance with one embodiment, the issuer host **108** is capable of being employed as one possible hardware configuration to support the systems and methods described herein. Accordingly, although the issuer host **108** is illustrated as a standalone computing device, any suitable computing environment is may be employed. For example, computing architectures including, but not limited to, multiprocessor, distributed, tablet, mainframe, supercomputer, digital and analog can be employed in accordance with varying embodiments set forth herein. It will further be appreciated that the issuer host **108** may include computer workstations, personal computers, combinations thereof, or any other computing devices.

The memory **146** may store the merchant application **218** and the user application **316** for communication to respective merchant devices **102** and user devices **104** during installation and registration of the applications **218** and **316** on the respective devices **102** and **104.**

The instructions **148** stored in memory **146** may include an authorization component **152** that is configured to respond to an authorization request **139** received from the merchant acquiring host **106** corresponding to a transaction between the merchant device **102** and the user device **104.** The authorization component **152** may generate messages to the merchant acquiring host **106** in response to a request for authorization, which messages may include details associated with approval, e.g., confirmation codes, approval message, etc., or denial, e.g., insufficient funds, stolen account, etc.
The instructions **148** may further include a virtual credit card issuing component **153,** that is configured to issue credit cards, prepaid cards, and the like, in accordance with rules and regulations established by MASTERCARD, VISA, DISCOVER CARD, AMERICAN EXPRESS, or the like. The virtual credit card issuing component **153** of the issuer host **108** may further be configured to generate, i.e., issue, credit cards, encrypt data associated with a user or account on credit cards or associated semiconductor chips, perform the card monetary authorizations and facilitate the settling of funds with all parties involved, e.g., a merchant device **102,** the user device **104,** the merchant acquiring host **106,** etc. The issuer host **108** is illustrated in FIGURE 1 as a server for example purposes only, and it will be appreciated that any suitable hardware, software, or combinations thereof, are capable of assisting in the issuance of virtual credit cards **322,** approval or denial of transactions, and settling of merchant accounts **170,** as set forth in greater detail below.

The issuer host **108** may also include one or more communications interface devices **156, 158** for communicating with external devices or to receive external input. The I/O interface **158** may communicate with the data storage device **168** via a communications link **162.** The data storage device **168** may be any mass storage device known in the art including, for example and without limitation, magnetic storage drives, a hard disk drive, optical storage devices, flash memory devices, or any suitable combination thereof. In accordance with one embodiment, the data storage device **168,** illustrated in FIGURE 1 as a database, may be configured to store account holder secure information **320** (e.g., virtual credit card information **322,** predefined funding source **324,** other identification associated with the user device **104,** and the like), and the like. The data storage device **168** may further store information relating to merchant accounts **170** and issuer accounts **172** so as to enable the immediate reconciliation of payments due the merchant device **102** from transactions with the user device **104.** The I/O interface **158** may further communicate with an associated user display **164** or input component **166,** e.g., keyboard, mouse, etc., via a communications link **160.**

The I/O interface **156** may communicate with the network **110** via the communications link **118,** send a merchant application **218** to the merchant device **102,** send a user application **316** to the user device **104,** send a virtual credit card 326 to the user device **104,** receive an authorization request **139** including transaction details **224** from the merchant acquiring host **108,** communicate with one or more banks (not shown), and the like, as are discussed in greater detail below. The various components of the issuer host **108** may be all connected by a data/control bus **154.** In one embodiment, the issuer host **108** is capable of processing closed-loop accounts (accounts that are only accepted at a single retailer or subset of retailers) or open loop (branded card, such as MASTERCARD, VISA, etc., acceptable wherever such brands are accepted). The issuer **host 108** may provide end-to-end services, e.g., issuing, processing, and reconciliation operations. That is, the issuer host **108** may function as both issuer and merchant acquiring host **106,** as discussed above.

According to one embodiment, the communications link **118** may include, for example and without limitation, 802.11a, 802.11b, 802.11g, 802.11(x), WiMax, LTE, Bluetooth, the public switched telephone network, GSM, CDMA, a proprietary communications network, infrared, optical, or any other suitable wired or wireless data transmission communications known in the art. Various network protocols, implementations or models may be used to facilitate communications amongst the various components illustrated in FIGURE 1 including, for example and without limitation, TCP/IP, token rings, Ethernet, WAN, VLAN, WLAN, Internet, other packet-switching protocols, or the like.

The memory **146** may represent any type of non-transitory computer readable medium such as random access memory (RAM), read only memory (ROM), magnetic disk or tape, optical disk, flash memory, or holographic memory. In one embodiment, the memory **146** comprises a combination of random access memory and read only memory. In some embodiments, the processor **144** and memory **146** may be combined in a single chip. In another embodiment, the memory **146** may further correspond to any mass storage device(s), for example, magnetic storage drives, a hard disk drive, optical storage devices, flash memory devices, or a suitable combination thereof. The network interface(s) **156, 158** allow the issuer host **108** to communicate with other devices via the computer network **110,** a cellular network, advanced cellular networks, personal area networks, and may comprise a modulator/demodulator (MODEM). Memory **146** may store data the processed in the method as well as the instructions **148** for performing the exemplary method.

The digital processor **144** can be variously embodied, such as by a single core processor, a dual core processor (or more generally by a multiple core processor), a digital processor and cooperating math coprocessor, a digital controller, or the like. The digital processor **144,** in addition to controlling the operation of the issuer host **108,** executes the instructions **148** stored in memory **146** for performing portions of the method outlined in FIGURES 4-9.

The term "software," as used herein, is intended to encompass any collection or set of instructions executable by a computer or other digital system so as to configure the computer or other digital system to perform the task that is the intent of the software. The term "software" as used herein is intended to encompass such instructions stored in storage medium such as RAM, a hard disk, optical disk, or so forth, and is also intended to encompass so-called "firmware" that is software stored on a ROM or so forth. Such software may be organized in various ways, and may include software components organized as libraries, Internet-based programs stored on a remote server or so forth, source code, interpretive code, object code, directly executable code, and so forth. It is contemplated that the software may invoke system-level code or calls to other software residing on a server or other location to perform certain functions.

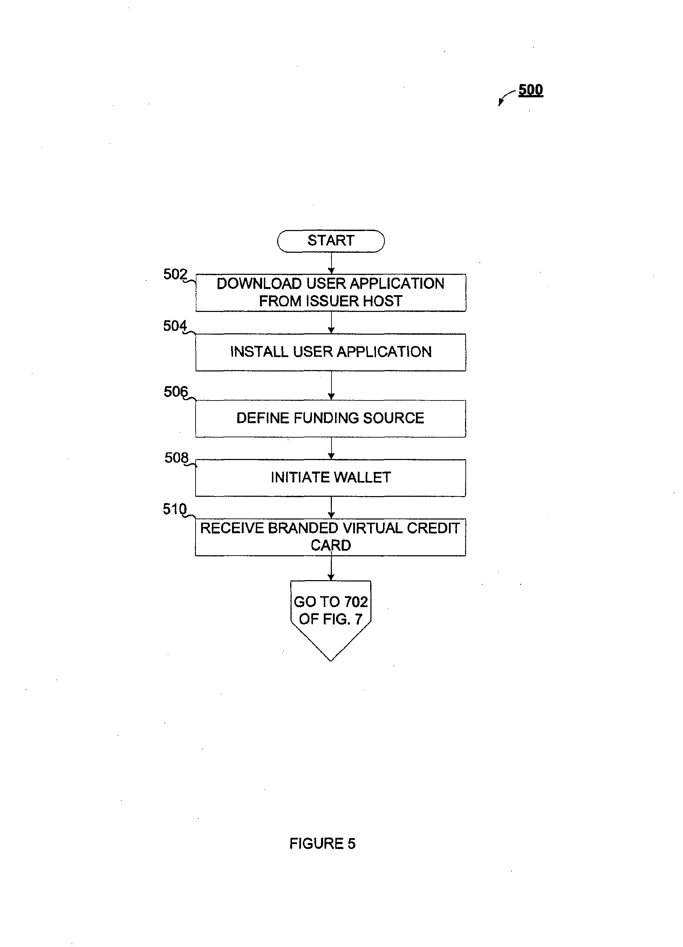

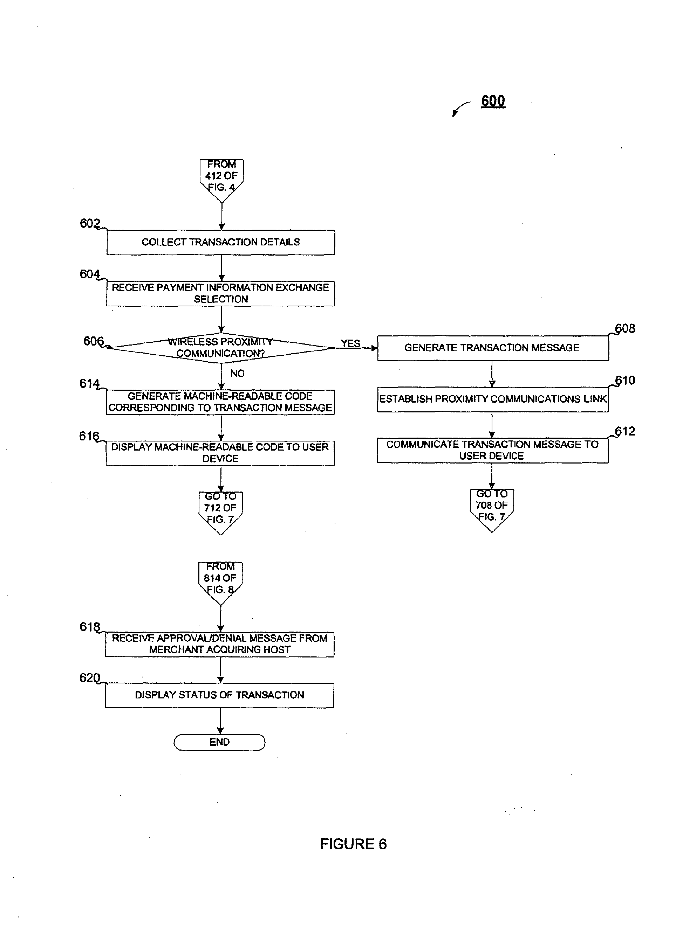

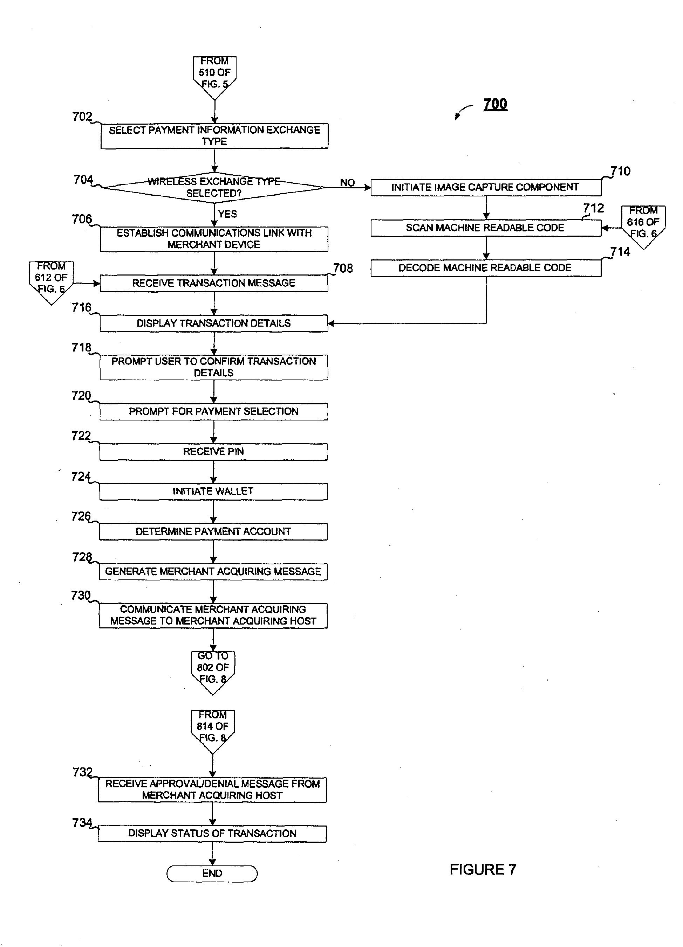

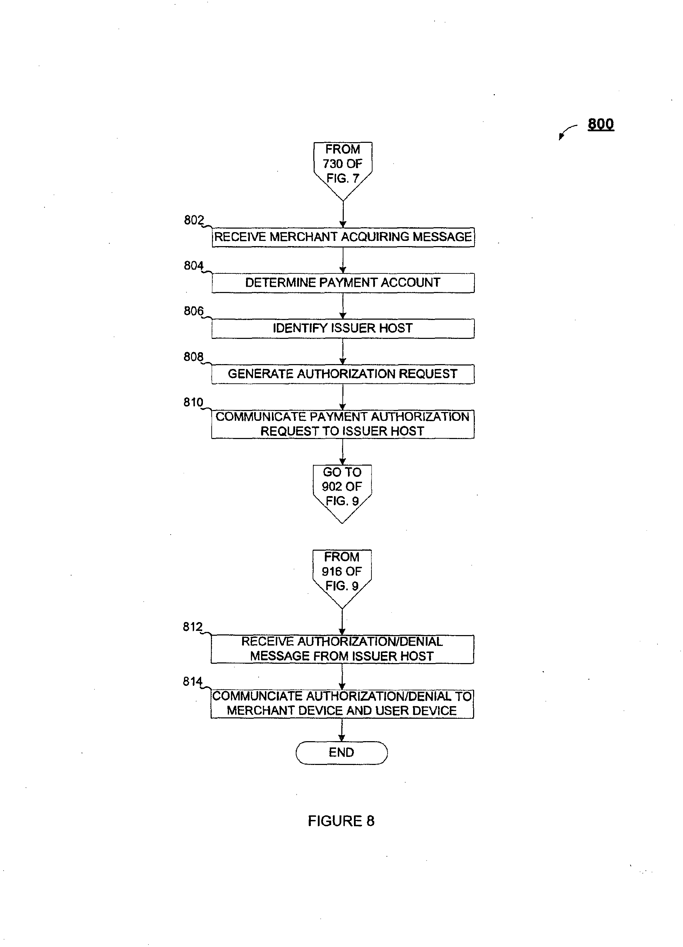

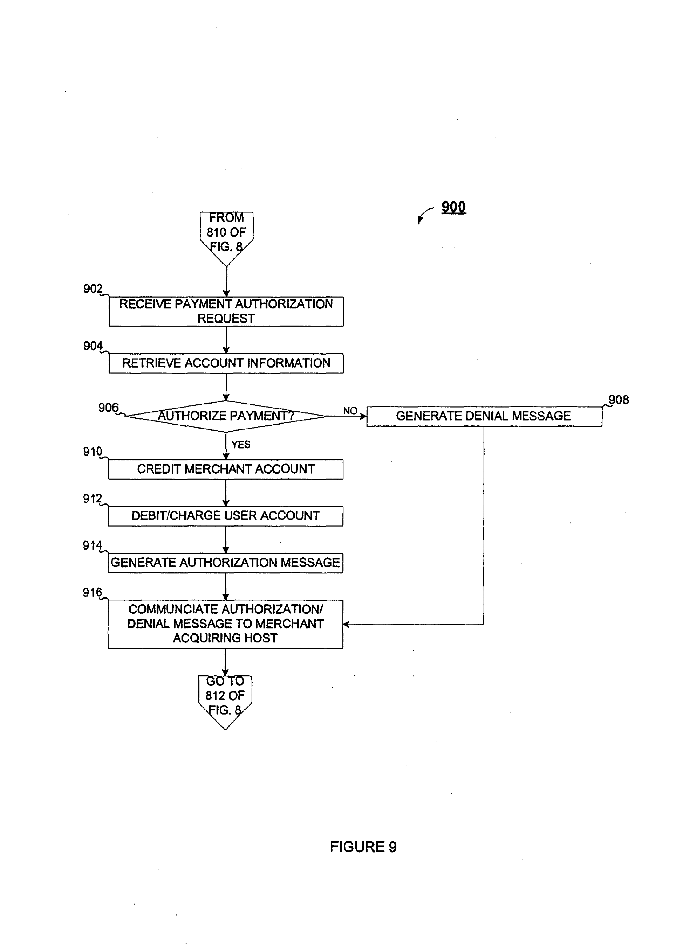

Turning now to FIGURE 4, there is shown an exemplary method **400** for secure mobile transaction payments. The method **400** depicted in FIGURE 4 represents the setup of secure mobile transaction payments on the merchant device **102.** FIGURE 5, discussed below, depicts a method **500** for setting up and enabling transactions with the merchant device **102,** from the perspective of a user device **104.** FIGURE 6, discussed below, depicts an example method **600** for secure mobile transaction payments via the merchant device **102,** in accordance with the systems and methods discussed herein. FIGURE 7, discussed below, depicts an example method **700** for secure mobile transaction payments via the user device **104,** in accordance with the systems and methods discussed herein. FIGURE 8, discussed below, depicts an example method **800** for secure mobile transaction payments via the merchant acquiring host **106,** in accordance with the systems and methods discussed herein. FIGURE 9, discussed below, depicts an example method **900** for secure mobile transaction payments via the issuer host **108,** in accordance with the systems and methods discussed herein.

The setup of the secure mobile transaction payment method **400** of FIGURE 4 begins **402,** whereupon a merchant, i.e., the merchant device **102,** registers with the issuer host **108.** In one embodiment, the merchant device **102** establishes a communications link with the issuer host **108** via respective communications links **112** and **118** over the network **110** to submit merchant information **230** to the issuer host **108.** It will be appreciated that during such registration, the issuer host **108** may establish or setup a merchant account **170** associated with the merchant device **102,** including any payment information (transaction settlement), contact information, merchant specific information, merchant type (e.g., restaurant, store, vendor, etc.), and the like.

The merchant device **102** may then download a merchant application **218** from the issuer host **108** at **404.** In one embodiment, a standard application **218** is downloaded by the merchant device **102.** In another embodiment, the issuer host 108 may generate a personalized merchant application **218** specific to the merchant device **102** and/or merchant associated therewith, specific to the type of merchant, or the like. It will be appreciated that the merchant application **218** may be specific to a particular operating system of the merchant device **102,** such that multiple merchant applications **218** stored on the issuer host **108** may each be specific to iOS, ANDROID, BLACKBERRY, WINDOWS, etc. and communicated to the merchant device **102** utilizing such an operating system.

The merchant application **218** is then installed, at **406,** in memory **206** of the merchant device **102.** Subsequent to or contemporaneously with installation, the merchant device **102** may register with the merchant acquiring host **106** via the communications link **112** over the computer network **110** at **408.** According to one embodiment, the merchant device **102** during registration may define certain parameters associated with the processing of transactions at **410.** Such parameters may include, for example and without limitation, the type of merchant, the contact information of the merchant, and the like. Such parameters may further be stored in memory **122** of the merchant acquiring host **106** for use during facilitation of the settlement of transactions between the merchant device **102** and the user device **104,** as discussed below. At **412,** the merchant device **102** designates a merchant account **170** for settlement of transactions between the merchant device **102** and any of a plurality of user devices **104.** Operations with respect to FIGURE 4 then terminate and proceed to **602** of FIGURE 6, as discussed below.

Turning now to FIGURE 5, there is shown an exemplary method **500** for setting up the user device **104** to utilize the user application **316** for secure mobile transaction payments. At **502,** the user device **104** downloads a user application 316 from the issuer host **108.** As will be appreciated, the user application **316** may be specific to a particular operating system associated with the user device **104,** and the issuer host **108** may store a plurality of different user applications **316** in memory **146** pertaining to those operating systems, e.g., iOS, ANDROID, BLACKBERRY, WINDOWS, etc. In some embodiments, the user application **316** may be stored on a third party server and downloadable via a central repository of applications, such as GOOGLE PLAY store, ITUNES, BLACKBERRY store, WINDOWS store, AMAZON store, or the like.

The user device **102,** i.e., the processor **302** associated therewith, then installs the user application **316** into memory **304** at **504.** The installation of the user application **316** on the user device **102** may include a plurality of different steps, each of which may be necessary to utilize the user application **316.** For example, the installation performed at **504** may include registration of the user device **102** with the merchant acquiring host **106** and the issuer host **108.** Such registration may require the establishment of a user account corresponding to account holder information **320,** user identification (user and/or device specific), contact information, passwords, PINs, and the like. It will further be appreciated that such registration may be accomplished via the communications link **114** over the computer network **110** with the merchant acquiring host **106** and/or issuer host **108,** or the like.

At **506,** the user device **104** defines a funding source **324** for payment of transactions associate with the user device **104.** It will be appreciated that the defining of the funding source **324** may occur during installation and setup of the user application **316** or subsequently after installation. According to one embodiment, the funding source **324** may correspond to any credit card, checking, debit, or other account from which the issuer host **108** may collect payment for transactions. Suitable examples may include AMERICAN EXPRESS, DISCOVER, MASTER CARD, VISA, and the like. In some embodiments, the funding source **324** may correspond to a user account previously associated with the issuer host **108.** It will be appreciated that the predefined funding source **324** may be used to top up a virtual credit card **326** to be used in conducting the transactions, such that the user is unaware of the type of credit card use (e.g., MASTER CARD, VISA, etc.) for the transaction, instead only paying on the predefined funding source **324,** e.g., an AMERICAN EXPRESS card.

A mobile wallet **322** is then initiated in memory **304** of the user device **104** in association with the user application **316** at **508.** According to some embodiments, the mobile wallet **322** may be a separate from or integral with the user application **316.** That is, the mobile wallet **322** may be implemented and function independent of the user application **316** and transactions conducted thereby. Such mobile wallet **322** may be implemented as set forth in co-pending U.S. Patent Application Serial No.13/533,057, the entirety of which is incorporated by reference herein. The mobile wallet **322** may further utilize a separate registration operation with the issuer host **108.**

At **510,** a branded virtual credit card **326** is received into the mobile wallet **322** stored in memory **304** of the user device **104.** The branded virtual credit card **326** may be issued by the issuer host **108** in the form of a prepaid MASTER CARD, VISA card, AMERICAN EXPRESS card, or the like, having a set amount of funds on it from the predefined funding source **324.** In some embodiments, the issuer host **108** may issue prepaid cards branded under a major credit card company, e.g., MASTER CARD, VISA, AMEX, etc., and facilitate the backend operations of topping up funds available on that prepaid card using the predefined funding source **324.** In accordance with one embodiment, the virtual credit card 326 may be dynamically generated by the issuer host **108** in response to an authorization request **139** received from the merchant acquiring host **106,** a request from the user application **316** of the user device **104,** or the like. The dynamic issuance of the virtual credit card **326** may thus be generated for a specific transaction or a specific cost associated with a particular transaction. Operations with respect to FIGURE 5 then progress to **702** of FIGURE 7, wherein operation of the user device **104** during a transaction with the merchant device **102** is discussed.

Referring now to FIGURE 6, there is shown an exemplary method **600** for use in mobile transaction payments with respect to the merchant device **104.** The merchant device **102,** such as a point of sale device, mobile device, workstation, or the like, first collects transaction details **224** at **602.** As discussed above, transaction details **224** may include, for example, cost, items, totals, taxes, location, store number, and the like. For example, the transaction details **224** may include the name of an item, UPC code, retail price, discounts/coupons, tax, store identifier, and the like.

At **604,** the payment information exchange selection is received corresponding to the type of exchange selected by the user of the user device **104** to receive transaction details **224.** That is, the merchant device **102** receives a selection of the type of communication channel to utilize in communicating the transaction details **224** to the user device **104.** As discussed above, the systems and methods set forth herein are capable of utilizing a plurality of different methods for communication of transaction details, e.g., the display of a code **226,** a short-range communication protocol, an SMS message, an email message or other manner in which to communicate the transaction message **113,** or the like. Accordingly, a determination is made at **606** whether wireless proximity communication is to be utilized. That is, whether the merchant device **102** and the user device 104 are to utilize a close range wireless communication link **111,** such as NFC, BLUETOOTH, etc., to communicate the transaction details **224.**

Upon a positive determination at **606,** operations proceed to **608,** whereupon the processor **202** in accordance with the transaction message generator **222** in the instructions **204** generates a transaction message **113.** In accordance with one embodiment, the transaction message **113** may include the transaction details **224,** merchant information **230,** any extra fields (e.g., tips, etc.), hash key, timestamp, and the like. A communications link **111** is then established between the merchant device **102** and the user device **104** using the selected or applicable short-range communications protocol, e.g., NFC, BLUETOOTH, proprietary channel, infrared, etc. The merchant device **102** then communicates the transaction message **113** to the user device **104** via the communications link **111** at **612.** Operations then proceed to **708** of FIGURE 7.

Upon a determination at **606** that a wireless communication method has not been selected, operations proceed to **614.** At **614,** the processor **202** in accordance with the code generator **220** stored in the instructions **204** of memory **206** generates a unique code corresponding to the transaction currently underway between the merchant device **102** and the user device **104.** In accordance with one embodiment, the code generator **220** is operable to generate a unique machine-readable code **226,** e.g., a QR code, DatGlyph, barcode, etc., which suitably encodes the transaction details **224,** merchant information **230,** extra fields, timestamp, hash key, and the like. It will be appreciated that the code **226** may visually represent the information contained in the transaction message **113** referenced above.

The merchant device **102** may then display the machine-readable code **226** at **616** via the display **214.** In some embodiments, the merchant device **102** utilizing an associated printer, may output a tangible receipt containing the machine-readable code **226** for use by the user device **104.** Operations then proceed to **712** of FIGURE 7 for continuing of the transaction initiated in FIGURE 6.

FIGURE 7 illustrates an exemplary method **700** utilized by the user device **104** for mobile transaction payments. Operations with respect to FIGURE 7 begin at **702,** whereupon the payment information exchange type is selected. As discussed with respect to FIGURE 6, the payment information exchange type may be selected from a short-range communications protocol, a display of machine-readable code, email, SMS messaging, or the like. It will be appreciated that while the example implementation discussed herein utilizes a short-range communication protocol or code display, other forms of wired or wireless methods for communicating the transaction details **224** to the user device **104** may also be utilized in accordance with the systems and methods set forth herein.

A determination is then made at **704** whether a wireless exchange type has been selected. Upon a positive determination at **704,** operations proceed to 706, whereupon a short-range communications channel **111** is established between the user device **104** and the merchant device **102.** It will be appreciated that such link **111** may utilize a proprietary communication connection, an NFC communication, a BLUETOOTH communication, infrared communication, or the like. A transaction message **113** is then received by the user device **104** over the established communications link **111** at **708** (from **612** of FIGURE 6), following which the transaction details **224** contained in the transaction message **113** are displayed via the display **308** of the user device **104** at **716.**

Returning to **704,** upon a determination that a wireless communication exchange is not selected, operations proceed to **710.** At **710,** the processor **302** in accordance with the user application **316** initiates the image capture component **314.** The image capture component **314** then scans the machine-readable code **226** at **712** (from **616** of FIGURE 6). The decoder **318** stored in memory **304** of the user device **104** then decodes machine-readable code **226** at **714.** It will be appreciated that such decoder **318** is suitably configured to read the type of code **226** utilized in accordance with the implementation, i.e., when the code **226** is implemented as a QR code or DatGlyph, the decoder **318** is configured to read and interpret QR codes or DatGlyphs. The transaction details **224** and other information previously encoded in the code **226** by the merchant device **102** are then displayed to the user via the display **308** of the user device **104** at **716.**

At **718,** the user associated with the user device **104** is prompted to confirm the transaction details **224** displayed on the user device display **308.** In one embodiment, the prompt at **718** includes a prompt for the user to input a suitable tip or fill in other necessary fields associated with the transaction. Following confirmation, operations proceed to **720,** whereupon payment selection is received from the user corresponding to a desired payment account or card selection. It will be appreciated that the user may be presented with choices for payment of the transaction, such as the predefined funding source **324,** the virtual credit card **326,** or other account information. At **722,** the user may optionally input a PIN associated with the account or card selected.

The mobile wallet **322** associated with the user device **104** may then be initiated at **724** and used to determine the appropriate account holder secure information **320** (e.g., the virtual card **326,** user identification, etc.) for communication to the merchant acquiring host **106** in accordance with the selected payment form at **726.** The merchant acquiring message generator **328** resident in memory **304** may then be used to generate a merchant acquiring message **330** containing the transaction details **224,** the merchant information **230,** and the account holder secure information **320** at **728.**

The merchant acquiring message **330** may then be communicated at **730** to the merchant acquiring host **106** via the communication link **114** over the computer network **110.** Operations with respect to the transaction being processed in FIGURE 7 then proceed to **802** of FIGURE 8.

FIGURE 8 illustrates an exemplary method **800** utilized by the merchant acquiring host **106** for mobile transaction payments in accordance with one aspect of the subject disclosure. At **802,** the merchant acquiring host **106** receives a merchant acquiring message **330** from the user device **104** via the communications 116 over the computer network **110.** As discussed above, the merchant acquiring message **330** may include transaction details **224,** merchant information **230,** and account holder secure information **320.** At **804,** the processor **120** or other suitable component associated with the merchant acquiring host **106** processes the received merchant acquiring message **330** in accordance with instructions **124** stored in memory **122** to determine the payment account for the transaction at **804.** That is, the merchant acquiring host **106** processes the account holder secure information **320** to identify the credit card or other account information necessary to facilitate settlement of the transaction between the user device **104** and the merchant device **102.**

At **806,** the issuer host **108** associated with the determined payment account is identified. It will be appreciated that the issuer host **108** may be identified based upon the credit card number or account number, which may include indicia corresponding to a certain issuer, bank, or the like. Following identification of the correct issuer host **108,** operations proceed to **808** whereupon the merchant acquiring host **106** in accordance with the authorization request component **138** generates a payment authorization request **139** inclusive of the account holder secure information 320, the merchant information **230,** and some or all of the transaction details **224.** The payment authorization request **139** is then communicated to the identified issuer host **108** at **810.** In one embodiment, a transaction status component **140** resident in the instructions **124** of memory **122** may facilitate the generation and communication of transaction status **142** to both the merchant device **102** and the user device **104.** Such transaction status **142** may be continuously sent to the devices **102** and **104** as information is received from the issuer host **108** and include, for example, status information that reflects a payment request **139** has been submitted, authorization is pending, response received, no response received, etc. After communication of the payment authorization request **139** to the issuer host **108,** operations with respect to FIGURE 8 proceed to **902** of FIGURE 9.

Turning now to FIGURE 9, there is shown an exemplary method **900** of the issuer host **108** for mobile transaction payments in accordance with one embodiment contemplated herein. At **902,** a payment authorization request **139** is received from the merchant acquiring host **106** corresponding to a transaction between the merchant device **102** and the user device **104.** The account holder secure information **320** is retrieved from the request **139** at **904.** A determination is then made at **906** whether to authorize payment in response to the received authorization request **139.** In accordance with one embodiment, an authorization component **152** in instructions **148** of the memory **146** of the issuer host **108** retrieves account holder secure information **320** in data store **168** to determine whether funds are available to process the transaction set forth in the transaction details **224.** That is, the issuer host **108** determines whether the transaction should be approved based upon the available credit or funds associated with the user account identified by the secure information **320.**

Upon a negative determination at **906,** e.g., insufficient funds, predefined funding source **324** expired or invalid, etc., operations proceed to **908,** whereupon a denial message is generated in response to the authorization request **139.** At **916,** the denial message is communicated to the merchant acquiring host **106** via the communications link **118** over the computer network **110.** As previously discussed, although illustrated in FIGURES 1-9 as separate entities, the merchant acquiring host **106** and issuer host **108** may be implemented as the same entity, on the same device, or the like, and the depiction of two distinct entities is shown for purposes of illustration only.

Returning to **906,** upon a determination to authorize the payment, operations proceed to **910,** whereupon the merchant account **170** associated with the merchant information **230** contained in the authorization request **139** is credited with the amount necessary to settle the transaction between the merchant device **102** and the user device **104.** At **912,** the user account in issuer accounts **172** is debited/charged corresponding to the amount credited to the merchant account **170.** The issuer host **108** then generates an authorization message (e.g., confirmation number, authorization number, totals, etc.) at **914** corresponding to the successful settlement of accounts **170** and **172** pursuant to the transaction between the merchant device **102** and the user device **104.** Operations then proceed to **916,** whereupon the authorization message is communicated to the merchant acquiring host **106.** Operations then return to **812** of FIGURE 8 with respect to the merchant acquiring host **106** completing the transaction between the merchant device **102** and the user device **104.**

At **812** of FIGURE 8, the authorization or denial message is received by the merchant acquiring host **106** from the issuer host **108.** The merchant acquiring host **106** then communicates authorization or denial of the transaction identified in the transaction details **224** to both the merchant device **102** and the user device **104** at **814.** Operations with respect to FIGURE 8 and the merchant acquiring host **106** thereafter terminate.

Returning to FIGURES 6 and 7, the authorization or denial from the merchant acquiring host **106** is respectively received at **618** and **732** by the merchant device **102** and the user device **104.** The merchant device **102** thereafter displays the status **142** of the transaction indicating either the approval or denial thereof at **620,** whereafter operations with respect to the merchant device **102** terminate. Similarly, the user device **104** displays the status **142** of the transaction indicating the approval or denial of the transaction via the display **308,** thereafter operations with respect to the user device **104** terminate.

The method illustrated in FIGURES 4-9 may be implemented in a computer program product that may be executed on a computer. The computer program product may comprise a non-transitory computer-readable recording medium on which a control program is recorded (stored), such as a disk, hard drive, or the like. Common forms of non-transitory computer-readable media include, for example, floppy disks, flexible disks, hard disks, magnetic tape, or any other magnetic storage medium, CD-ROM, DVD, or any other optical medium, a RAM, a PROM, an EPROM, a FLASH-EPROM, or other memory chip or cartridge, or any other tangible medium from which a computer can read and use.

Alternatively, the method may be implemented in transitory media, such as a transmittable carrier wave in which the control program is embodied as a data signal using transmission media, such as acoustic or light waves, such as those generated during radio wave and infrared data communications, and the like.

The exemplary method may be implemented on one or more general purpose computers, special purpose computer(s), a programmed microprocessor or microcontroller and peripheral integrated circuit elements, an ASIC or other integrated circuit, a digital signal processor, a hardwired electronic or logic circuit such as a discrete element circuit, a programmable logic device such as a PLD, PLA, FPGA, Graphical card CPU (GPU), or PAL, or the like. In general, any device, capable of implementing a finite state machine that is in turn capable of implementing the flowchart shown in FIGURES 4-9, can be used to implement the method estimating origins and destinations for users of a transportation system.

It will be appreciated that variants of the above-disclosed and other features and functions, or alternatives thereof, may be combined into many other different systems or applications. Various presently unforeseen or unanticipated alternatives, modifications, variations or improvements therein may be subsequently made by those skilled in the art which are also intended to be encompassed by the following claims.

## Claims

1. A method for mobile transaction payments, comprising:
receiving, by a user device, merchant information and transaction details corresponding to a transaction between an associated merchant and an associated user;
generating a merchant acquiring message inclusive of the transaction details, the merchant information, and account holder secure information corresponding to the associated user;
communicating the merchant acquiring message to a merchant acquiring host via an associated computer network;
receiving a response from the merchant acquiring host corresponding to at least one of an authorization or denial of the transaction; and
displaying, via an associated display, a status of the transaction in accordance with the received authorization or denial of the transaction,
wherein at least one of the receiving, generating, communicating, receiving, and displaying is performed with a computer processor of the user device.

2. The method of claim 1, wherein the transaction details are generated via a merchant application operative on an associated merchant device.

3. The method of claim 2, wherein receiving the transaction details further comprises:
scanning, via an image capture component of the user device, a machine-readable code displayed on an associated merchant device, the machine-readable code encoding the transaction details and merchant information therein; and
decoding the machine-readable code to determine the transaction details and merchant information encoded therein;
wherein preferably the machine-readable code is a QR code, a dataglyph, a proprietary machine-readable code, or a barcode.

4. The method of claim 2, wherein generating the merchant acquiring message further comprises:
initiating a mobile wallet having a virtual credit card issued by an issuer host stored therein;
receiving payment selection information from the associated user corresponding to at least one of the virtual credit card or a predefined funding source;
generating the merchant acquiring message in accordance with the received payment selection information and the decoded transaction details and merchant information;
the method preferably further comprising:
displaying, via the associated display of the user device, the received transaction details and merchant information; and
receiving input from the associated user corresponding to a confirmation of the transaction associated with the transaction details; and
generating the merchant acquiring message in response to a received confirmation input from the associated user.

5. The method of claim 4, wherein the virtual credit card is a credit card, a charge card, or a prepaid card issued by the issuer host;
wherein preferably the predefined funding source includes at least one of a checking account, a credit card account, a debit card account, a charge card account, or a savings account.

6. The method of claim 2, wherein receiving the transaction details further comprises:
establishing a short-range communications link between the user device and the associated merchant device; and
receiving a transaction message from the associated merchant device via the short-range communications link, wherein the transaction message includes the transaction details and the merchant information;
wherein preferably the short-range communications link is selected from the group consisting of near field communications link, a BLUETOOTH communications link, and an infrared communications link.

7. A computer program product comprising a non-transitory recording medium storing instructions, which when executed on a computer causes the computer to perform the method of any one of claims 1 to 6.

8. A system comprising memory storing instructions for performing the method of any one of claims 1 to 6, and a processor in communication with the memory which implements the instructions.

9. A mobile transaction payment system, comprising:
a merchant acquiring host, including:
an authorization request component configured to generate an authorization request to an associated issuer host for a transaction between an associated merchant device and an associated user device;
memory which stores instructions for:
receiving a merchant acquiring message from the associated user device, the merchant acquiring message including transaction details, merchant information and account holder secure information,
identifying the associated issuer host in accordance with the account holder secure information of the merchant acquiring message,
generating the authorization request to the identified issuer host corresponding to the transaction details, merchant information, and account holder secure information, and
communicating authorization or denial of the transaction associated with the transaction details to the associated merchant device and the associated user device; and
a processor in communication with the memory which executes the instructions.

10. The mobile transaction payment system of claim 9, further comprising a transaction status component configured to communicate status information associated with the transaction between the associated merchant device and the associated user device;
wherein preferably the issuer host comprises:
an authorization component configured to authorize a transaction between the merchant device and the user;
memory storing a merchant account, an issuer account, and account holder secure information; and
a processor in communication with the memory, wherein the memory stores instructions executed by the processor for:
receiving an authorization request from the merchant acquiring host corresponding to the transaction between the merchant device and the user device,
retrieving account holder secure information in accordance with the received authorization request,
generating an authorization message corresponding to at least one of an authorization or a denial of the transaction, and
communicating the authorization message to the merchant acquiring host.

11. The mobile transaction payment system of claim 10, wherein the issuer host further comprises a virtual credit card issuing component configured to issue a virtual credit card in response to a registration of the associated user device and to associate funds from a predefined funding source of the user with the virtual credit card;
wherein preferably the issuer host further comprises:
a merchant application stored in memory and configured to direct operations of the associated merchant device upon installation thereon; and
a user application stored in memory and configured to direct operations of the associated user device upon installation thereon;
wherein preferably the memory further stores instructions for:
crediting the merchant account in accordance with an authorization of the transaction; and
debiting the issuer account in accordance with the crediting of the merchant account.

12. The mobile payment transaction system of claim 10, wherein the associated merchant device comprises:
a code generator configured to generate a machine-readable code encoding the transaction details and merchant information;
memory storing the transaction details and merchant information; and
a processor in communication with the memory, wherein the memory stores instructions executed by the processor for:
collecting the transaction details corresponding to the transaction between the merchant device and the associated user device;
generating a machine-readable code corresponding to the collected transaction details and the merchant information,
displaying the generated machine-readable code via an associated display,
receiving at least one of an authorization or a denial of the transaction from the merchant acquiring host, and
displaying the status of the transaction;
wherein preferably the associated merchant device further comprises:
a transaction message generator configured to generate a transaction message inclusive of the transaction details and merchant information, and
wherein the memory further stores instructions which are executed by the processor for:
generating a transaction message including the transaction details and merchant information, and
communicating the generated transaction message to the associated user device via a short-range communication link.

13. The mobile transaction payment system of claim 12, wherein the associated user device comprises:
an image capture component configured to scan the machine-readable code displayed on the display associated with the merchant device;
a decoder configured to decode the machine-readable code to determine the transaction details and merchant information encoded therein;
a merchant acquiring message generator configured to generate the merchant acquiring message;
memory storing the account holder secure information and the virtual credit card;
memory which stores instructions for:
determining the transaction details and the merchant information from a scan of the machine-readable code by the image capture component,
generating the merchant acquiring message in accordance with the transaction details, the merchant information, and the account holder secure information, and
communicating the generated merchant acquiring message to the merchant acquiring host; and
a processor in communication with the memory which executes the instructions;
wherein preferably the user device memory further stores instructions for:
receiving a response from the merchant acquiring host corresponding to at least one of an authorization or denial of the transaction, and
displaying, via an associated display, a status of the transaction in accordance with the received authorization or denial of the transaction;
wherein preferably the user device memory further stores instructions for:
establishing a short-range communications link between the user device and the associated merchant device; and
receiving a transaction message from the associated merchant device via the short-range communications link, wherein the transaction message includes the transaction details and the merchant information.

14. A computer-implemented mobile payment transaction method, comprising:
collecting, by a merchant device having a processor and memory storing merchant information corresponding to an associated merchant, at least one transaction detail corresponding to a transaction between the associated merchant and an associated user;
generating a machine-readable code corresponding to the at least one collected transaction detail and the merchant information;
displaying the generated machine-readable code via an associated display;
receiving at least one of an authorization or a denial of the transaction from an associated merchant acquiring host; and
displaying the status of the transaction.

15. The computer-implemented method of claim 14, further comprising:
generating a transaction message including the transaction details and merchant information; and
communicating the generated transaction message to the associated user device via a short-range communication link.

16. A merchant device comprising memory storing instructions for performing the computer-implemented method of claim 14 or claim 15, and a processor in communication with the memory which implements the instructions.
